# EUROPEAN PATENT SPECIFICATION

(11) **EP 1 708 446 B1**
(45) Date of publication and mention of the grant of the patent: **04.06.2008**
(21) Application number: 05251917.0
(22) Date of filing: 29.03.2005
(51) Int. Cl.: H04L 29/06, H04L 12/56

(54) **Method, apparatus and system for managing Internet protocol based resources in a packet-based access network**
Verfahren, Vorrichtung und System für die Verwaltung von Internet basierenden Ressourcen in einem Packetzugangsnetzwerk
Procédé, dispositif et système pour la gestion de ressources réseaux Internet dans un réseau à accès par paquets

(43) Date of publication of application: 04.10.2006
(73) Proprietor: Lucent Technologies Inc., Murray Hill, New Jersey 07974-0636 (US); Lucent Technologies Network Systems GmbH, 90411 Nürnberg (DE)
(72) Inventor: Bauer, Markus, 91257 Pegnitz (Bavaria) (DE); Dekorsy, Armin, 90489 Nuremberg (DE)
(74) Representative: Sarup, David Alexander

(56) References cited:
- WO-A-99/51055
- WO-A-03/065654
- WO-A-03/065682

## Description

### 1. FIELD OF THE INVENTION

This invention relates generally to telecommunications, and more particularly, to wireless communications.

### 2. DESCRIPTION OF THE RELATED ART

Internet offers different types of communication services to users of wireless or mobile communication devices. A variety of communication and network protocols may be used to provide such communication services. One emerging communication service is Internet Protocol (IP)-based wireless telephony over IP, popularly known as voice over IP (VoIP). The Internet Protocol refers to a set of communications protocols that implement a protocol stack on which the Internet operates.

However, the Internet Protocol was designed to be used with packet-switched communication networks and, as originally designed, does not provide the characteristics necessary to support voice and video transmission. The lack of control over the amount of connections supported leads to highly variable delays for packets and often to packet loss. Moreover, transmission of most real-time multimedia streams over an IP network demands higher bandwidth with specific timing requirements, such as lower delay tolerance and higher end-to-end delivery guarantees than other non-IP data.

In the IP network, Quality of Service (QoS) defines the ability to compensate for traffic characteristics without compromising average throughput. One difference between conventional telecommunications networks and IP networks is that without explicit compensation for signaling packet transport, a particular QoS mechanism cannot ensure the reliable delivery of call-signaling messages. The telecommunications networks physically segregate signaling traffic on carefully calibrated, highly redundant networks.

The 3rd generation (3G) mobile communication system, namely Universal Mobile Telecommunication System (UMTS) supports multimedia services according to 3rd Generation Partnership Project (3GPP) specifications. The UMTS also referred as Wideband Code Division Multiple Access (WCDMA) includes Core Networks (CN) that are packet switched networks, *e.g.*, IP-based networks. Because of the merging of Internet and mobile applications, the UMTS users can access both telecommunications and Internet resources. However, the IP-based networks may not be multimedia oriented. Therefore, Quality of Service (QoS) may become a critical issue for the success of UMTS when providing an end user with a desired QoS if the IP-based network resources at various nodes are underutilized in provision of UMTS services.

Wide spread usage of the 3G mobile communications systems, such as UMTS or CDMA2000 has made the presence of next generation networks (NGN) inevitable. According to the International Telecommunication Union (ITU), a NGN is a packet-based access network that is capable of providing services including telecommunication services using multiple broadband, quality of service (QoS)-enabled transport standards. The ITU defines the QoS as the collective effect of service performance which determine the degree of satisfaction of a user of the service. It means it is the end user that decides whether he is satisfied with the provided QoS or not. Next generation networks are expected to provide users with high end-to-end quality (high data rate, high coverage, new services etc.) mobile internet applications. Beside these demands, one challenge of the next generation networks is to use of heterogeneous mobile communications comprising, for instance, 3G mobile system standards and IEEE 802.xx standards (*e.g.*, WLAN, WIMAX).

To provide an end-to-end service to users, a UMTS network may deploy a UMTS bearer service layered architecture specified by Third Generation Project Partnership (3GPP) standard. The provision of the end-to-end service is conveyed over several networks and realized by the interaction of the protocol layers. The resource management may affect provision of UMTS bearer services. To provide QoS effectively, several resource managers are employed throughout the whole network. Thus, resource management is important in provision of end-to-end QoS. The interference management within one cell and Radio Network Controller (RNC) resource management are equally important. Acting as the gateway interfacing the external networks and radio networks, the RNC controls more resources than base stations (Node Bs) and co-ordinates the service requirements from both the mobile stations and the external networks.

Specifically, an entire network autonomously manages the resources of the core network (fixed), the resources in the fixed portion of the radio access network (wired) and the resources of the wireless access portion. That is, a converged network performs a dedicated resource management that is specifically designed to fulfill its specific requirements and constraints for each individual portion of the network. Moreover, the wired together with the wireless portion are implemented by different radio access system standards (*e.g.*, UMTS or IEEE 802.xx). Each radio access system performs its own system specific resource as well as mobility management. For radio access systems inter-working across the wired and the wireless portions, two of the common conventional resource and mobility management schemes manage a vertical handover across the different radio access systems by means of a centralized mobility management entity or another vertical handover is performed by dedicated interfaces between any two radio access systems. Each inter-working pair uses a pair specific interface, *i.e.,* Ia, Ib, and Ic.

However, a dedicated fixed/wired/wireless system specific resource management scheme in a converged network scenario may be inflexible and inefficient to implement because use of different radio access technologies via dedicated inter-working interfaces may cause a redesign of an existing interface for each instance of integration of novel radio access systems or already existing systems, such as Digital Video Broadcast (DVB). That is, interfaces Ib and Ic have to be redesigned whenever an integration of a novel future radio access system is desired.

Furthermore, as these interfaces are expected to ensure no packet loss and should meet delay constraints of a user specific service during transition time from one radio access system to another, it is very likely that interface specifications increase overall complexity of next generation networks. To sum up, such an NGN architecture that utilizes radio access system interfaces offers another inflexible and inefficient solution similar to the dedicated fixed/wired/wireless system specific resource management of radio access system set forth above. Therefore, this dedicated approach to resource management in next generation networks cannot support users with multiple connections that may be simultaneously active via different communication interface technologies for wireless and/or wircline communication links.

Melpignano (WO 03/065654) and Siorpaes (WO 03/065682) describe conventional techniques for connecting a mobile unit to a wireless communication system, such as an NGN architecture, over multiple interfaces including wired and/or wireless connections.

The present invention is directed to overcoming, or at least reducing, the effects of, one or more of the problems set forth above.

### SUMMARY OF THE INVENTION

A method according to the present invention is set out in independent claim 1, to which the reader is now referred. Preferred features are laid out in the dependent claims.

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

In one embodiment of the present invention, a method is provided for managing one or more Internet Protocol based resources in a packet-based access network. The method includes enabling a plurality of concurrent connections between a user and the packet-based network. The plurality of connections includes at least one of a wireless connection over a wireless interface and a wired connection over a wired interface. The plurality of concurrent connections are configured to support at least one service associated with the user. The method also includes forming a plurality of metrics based on information indicative of transport of a plurality of packets during the at least one service associated with the user across said plurality of concurrent connections. Each of the plurality of metrics is associated with one of the plurality of connections, one of the at least one services, and the user. The method further includes routing said plurality of packets in said packet-based access network based on the plurality of metrics.

Internet protocol-based access, and a storage storing instructions to analyze transport of the plurality of packets across the wireless router during a specific service of the particular user for forwarding the plurality of packets based on an Internet protocol-based strategy being utilized on the network layer.

In yet another embodiment, a communication system may commonly manage one or more resources to determine routing of a plurality of packets for a particular user on a network layer of a packet-based access network across a fixed, wired network portion and a wireless network portion thereof. The communication system comprises a first and a second wireless router associated with the wireless network portion. Each wireless router of the first and second wireless routers may enable at least one of a first connection active over a first interface and a second connection being simultaneously active over a second interface such that each interface of the first and second interfaces provides a different type of Internet protocol-based access. A particular one of the first and second wireless routers may selectively communicate with a wireless communication device over any one of the at least one of the first connection active over the first interface and the second connection being simultaneously active over the second interface. The particular one of the first and second wireless routers may analyze transport of the plurality of packets between the first wireless router and a first Internet protocol-based router associated with the fixed, wired network portion of the packet-based access network during a specific service of the particular user for forwarding the plurality of packets based on an Internet protocol-based strategy being utilized on the network layer.

In still another embodiment, an article comprising a computer readable storage medium storing instructions that, when executed cause a communication system to enable at

### BRIEF DESCRIPTION OF THE DRAWINGS

The invention may be understood by reference to the following description taken in conjunction with the accompanying drawings, in which like reference numerals identify like elements, and in which:

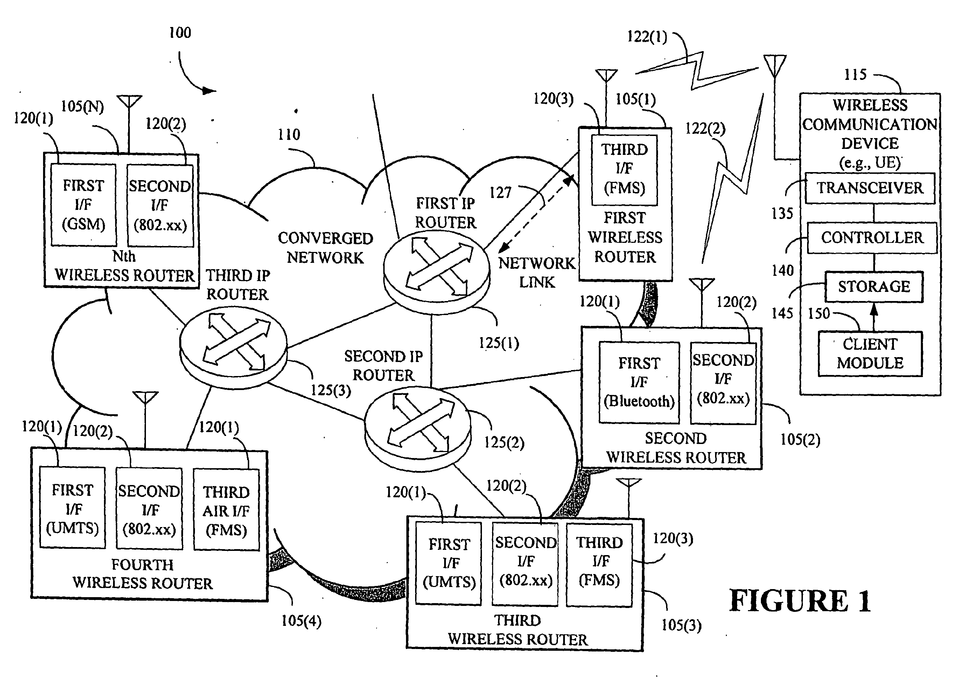

Figure 1 schematically depicts a packet-based access network to commonly or jointly manage one or more Internet Protocol based resources in a converged network environment according to one illustrative embodiment of the present invention;

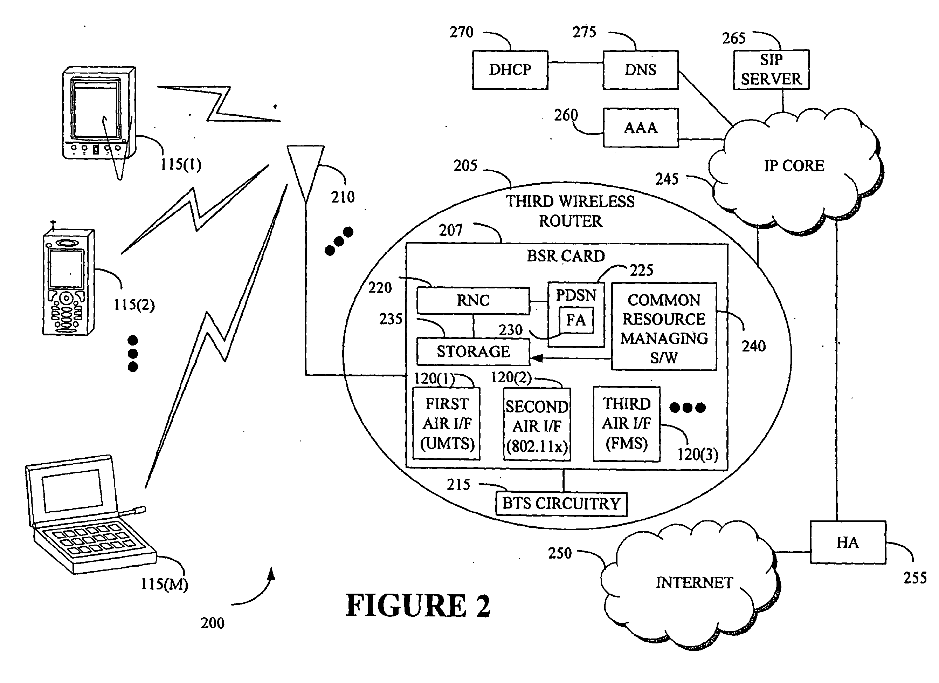

Figure 2 schematically depicts a cellular communication system including a wireless router to route packets over a first, second, or third interface defined at least in part by UMTS standard, IEEE 802.xx standard, and a future mobile standard, respectively in accordance with one embodiment of the present invention;

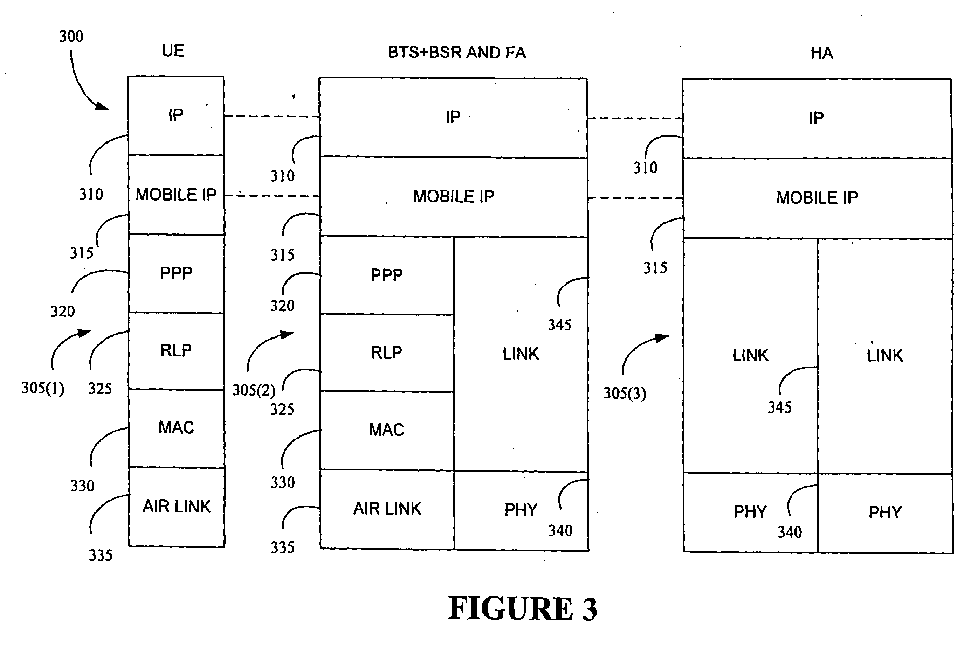

Figure 3 shows a protocol stack with an Internet Protocol (IP) layer and a mobile IP layer for a wireless router, such as a base station router that uses software to jointly manage the Internet Protocol based resources on a network layer having an associated Internet Protocol based strategy in accordance with one embodiment of the present invention;

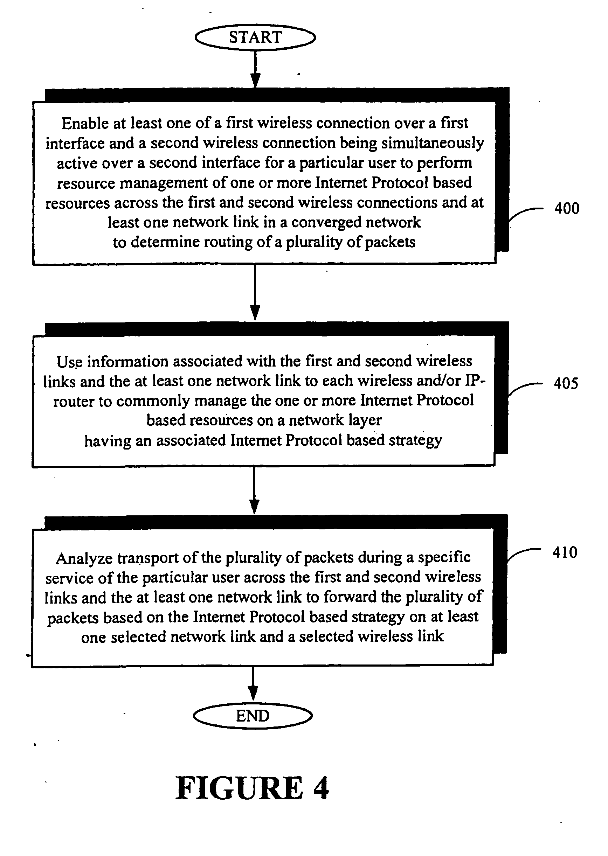

Figure 4 illustrates a stylized representation of a method for performing resource management of the Internet Protocol based resources to route a plurality of packets for a wireless communication device communicating with the wireless router shown in Figure 2 consistent with one embodiment of the present invention;

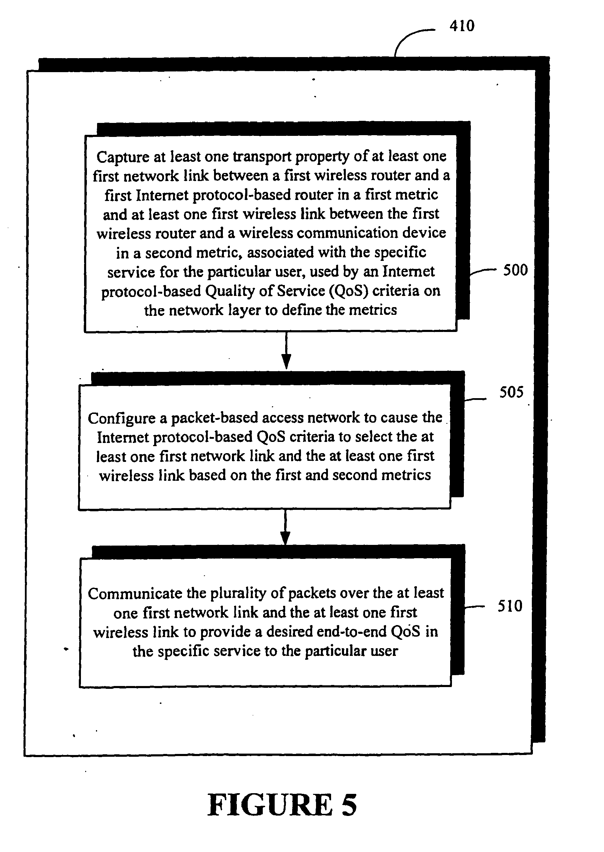

Figure 5 illustrates a stylized representation of a method for analyzing transport of the plurality of packets during the specific service of the particular user to forward the plurality of packets based on the Internet Protocol based strategy for the packet-based access network shown in Figure 1 across a fixed, wired network portion and a wireless network portion thereof in accordance with one illustrative embodiment of the present invention;

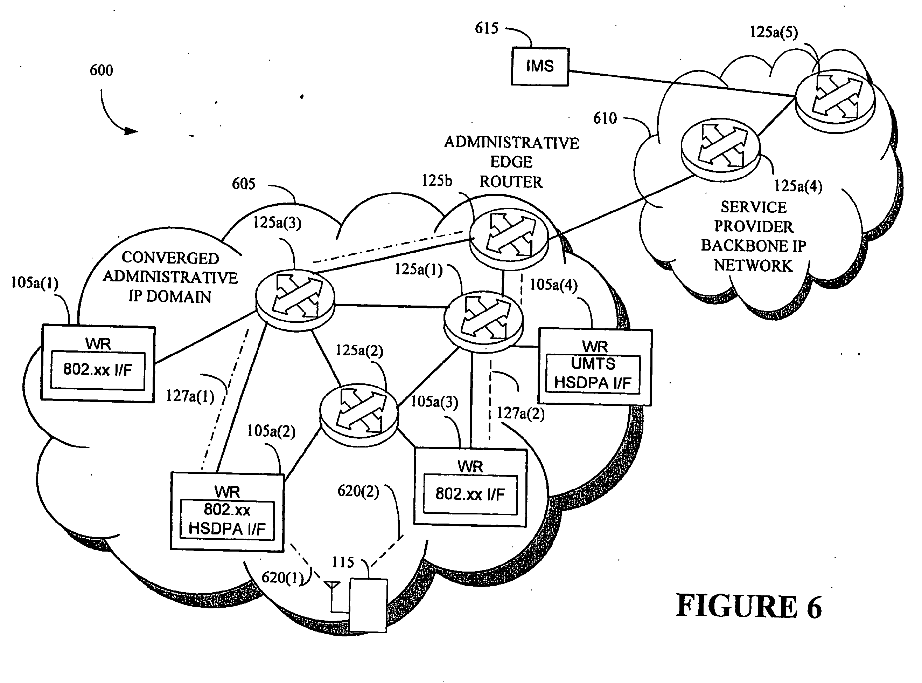

Figure 6 schematically depicts a next generation network to commonly or jointly manage one or more Internet Protocol based resources in a converged administrative IP domain according to one illustrative embodiment of the present invention;

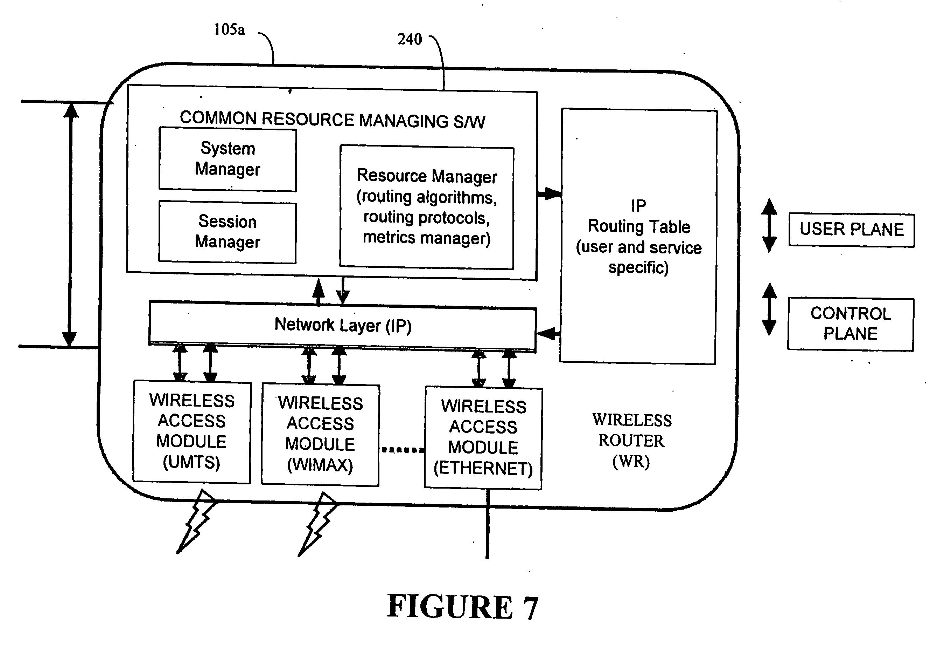

Figure 7 schematically depicts a wireless router capable of routing packets over wireless and/or wireline interfaces in accordance with one embodiment of the present invention; and

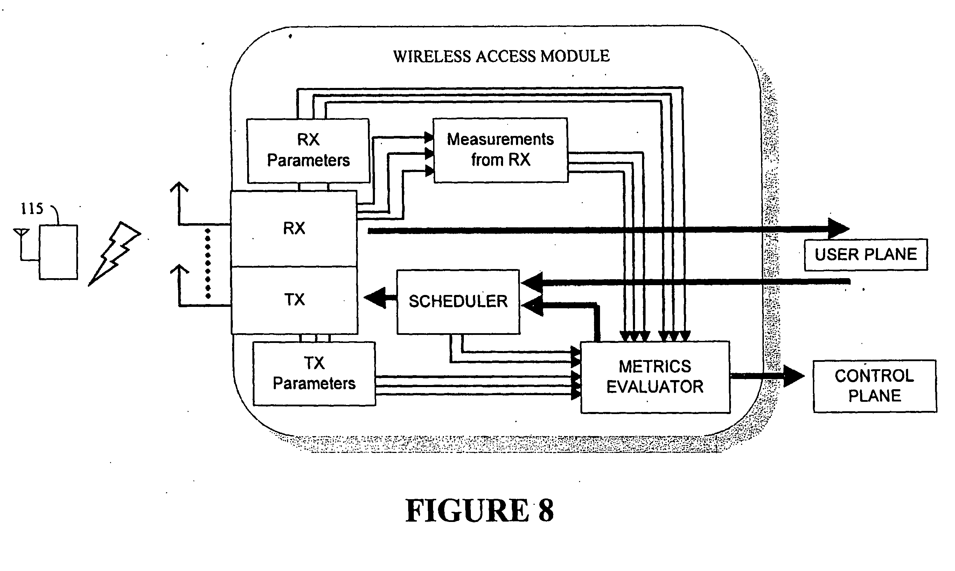

Figure 8 schematically depicts a wireless access module capable of evaluating metrics from parameters of a receiver and a transmitter for the next generation network shown in Figure 7 in a multi-input-multi-output (MIMO) antenna arrangement consistent with one embodiment of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions may be made to achieve the developers' specific goals, such as compliance with system-related and business-related constraints, which will vary from one implementation to another. Moreover, it should be appreciated that such a development effort might be complex and time-consuming, but may nevertheless be a routine undertaking for those of ordinary skill in the art having the benefit of this disclosure.

Generally, a method and apparatus is provided of performing resource management in next generation networks. To ensure a relatively high end-to-end service quality, the method and apparatus defines one or more user-service specific metrics being utilized by Internet Protocol (IP) mechanisms on a network layer to provide an IP-based resource management in a next generation network. In context with next generation networks, a wireless router, such as a wireless router may provide wireless radio access using a resource management that captures one or more properties of a wireless link and a network link as metrics that may be used by IP mechanisms. In a radio access system fixed/wired/wireless partitioning of a network enables commonly managing all resources of the entire network (fixed/wired/wireless). The resource management is performed on the network layer to be independent of a link layer. A common resource management software may comprise a wireless access module that utilizes metrics that gather wireless link and network link properties. One or more metrics used for performing resource management may be user-and-service specific to obtain a relatively high end-to-end user Quality of Service (QoS). For a link, instead of depending upon a single link metric, information of per user-service metrics from all wireless and/or wireline or network links in a converged administrative IP domain may be used. Thus, one single link may be associated with more than one metric per specific user of particular service. These metrics information may then be managed by IP-based mechanisms. Therefore, the common resource management software may treat any wireless radio link as "one more IP hop." In this manner, a wireless router may perform resource management of the Internet Protocol based resources in a next generation network. By enabling simultaneously active connections over a multiplicity of air or wireless interfaces and/or wireline interfaces at the wireless router, a desired Quality of Service (QoS) may be provided to a particular user during a specific service on packet-based cellular communications with a wireless communication device of a future mobile system.

Referring to Figure 1, in a packet-based access network 100 one ore more wireless routers 105(1-N) associated with a converged network 110 may commonly or jointly manage one or more Internet Protocol (IP) based resources for a converged network communication environment, according to one illustrative embodiment of the present invention. Examples of the Internet Protocol based resources include the communication interface and a backhaul network including an IP-based radio access network (RAN). The converged network 100 may be capable of interfacing with a host of mobile units or wireless communication devices implemented using disparate communication platforms, including which employ IP-based communications. In the converged network 100 competing trade-off between optimality and overhead associated with resource-allocation may exist. Accordingly, by commonly or jointly managing the Internet Protocol based resources, the wireless routers 105(1-N) may provide a flexible and/or an efficient management thereof.

One example of the packet-based access network 100 is a next generation network (NGN). In the NGN, service-related functions may be independent from underlying transport infrastructure. The NGN may offer an unrestricted access by users to different service providers. The NGN may support generalized mobility that allows a consistent and ubiquitous provision of services to users. The NGN may seamlessly handle convergence of the wireless and the fixed, wired infrastructure, ensuring a desired quality of service (QoS) on the Internet, for example. The QoS generally causes network elements to discriminate across traffic streams, treating each stream in a predefined manner based on performance constraints. The NGN may be related to any one of the 2G, 3G, or 4G standards and employ any one of the protocols including the UMTS, CDMA200, GSM, Bluetooth or the like. However, use of a particular standard or a specific protocol is a matter of design choice and not necessarily material to the present invention.

As one example, the IP-based communications in the packet-based access network 100 comprise packets of information that carry real-time multimedia streams of data, voice, and video across a wireless network portion and/or a fixed, wired network portion thereof. In one embodiment, the wireless routers 105(1-N) may cause packet forwarding in such real-time multimedia streams of such IP-based communications for an overall network performance or an end-to-end service provision. To handle several kinds of wireless and wired technologies, over the wireless network and/or the fixed, wired network portions each wireless routers 105 may include various integrated communication interface(s), such as wireless interfaces and/or wireline interfaces.

More specifically, each wireless router 105 may comprise one or more such integrated communication interface(s) including wireless interfaces and/or wireline interfaces to simultaneously support connections based on a host of mobile communication standards, *e.g.*, UMTS, IEEE 802.xx, GSM, and Bluetooth associated with different types of IP-based communications with a wireless communication device 115. For example, the third wireless router 105(3) may comprise a first interface (I/F) 120(1) to keep active a first connection with the wireless communication device 115 for a particular user thereof, a second I/F 120(2) to simultaneously keep active a second connection to the wireless communication device 115, and a third I/F 120(3) to simultaneously keep active a third connection to the wireless communication device 115. Specifically, the first wireless router 105(1) may keep active a first wireless link 122(1) with the wireless communication device 115 for a particular user thereof and the second wireless router 105(2) may simultaneously keep active a second wireless link 122(2) to the wireless communication device 115. An example of the first and second wireless links 122(1-2) includes a wireless IP-Hop. Measurements of the first and second wireless links 122(1-2) properties may be performed in a corresponding wireless router, *i.e.*, the first wireless router 105(1) and the second wireless router 105(2), respectively.

Each interface 120 may enable a different type of Internet Protocol based access to the converged network 100. The third wireless router 105(3) may jointly manage the one or more Internet Protocol based resources on a network layer of a protocol stack. The network layer may be the third layer or Layer 3 of an Open Systems Interconnection (OSI) model which maintains network protocol addresses (as compared to media access control (MAC) addresses) for transmitting messages to selected destinations. Because at the network layer routing of packets occurs based on one or more high-level network protocols, the network layer is responsible for addressing and delivery of packets across converged network 110, such as a wireless-enabled Internet.

For example, the wireless router 105 may be a device capable of connecting a wireless local area network (WLAN) to a LAN and/or a virtual LAN. Each wireless router 105 may control the routing of packets from a source to a destination and may provide alternate paths when necessary. Each wireless router 105 may read network layer addresses of the transmitted packets; and only forward packets of information those addressed from one wireless network to another wired or fixed network.

The converged network 110 may comprise a first, second, and a third Internet protocol-based routers 125(1-3) associated with the fixed, wired network portion of the packet-based access network 100. For example, the Internet protocol-based router 125 may be an ATM-based router that integrates an IEEE 802.xx based wireless Ethernet access point and a 10/100 Base-T Ethernet switching hub. A transport property of the first wireless link 122(1) and a network link 127 between the first wireless router 105(1) and the first Internet protocol-based router 125(1) may be captured in a metric, associated with a specific service for a particular user of the wireless communication device 115. Examples of the transport property of the first wireless link 122(1) and the network link 127 include bandwidth, delay, jitter, and packet loss. Measurements of the network link 127 properties may be performed in the Internet. However, besides in the Internet, the calculation of the metric may be carried out also in the first wireless router 105(1) based on the MAC-layer information.

The wireless communication device 115, for example, user equipment (UE) may comprise a conventional transceiver 135 coupled to a controller 140, in turn, coupled to a storage 145 storing instructions, such as a client module 150 to communicate with the converged network 110. The wireless communication device 115 may take the form of any of a variety of devices, such as mobile terminals including cellular phones, personal digital assistants (PDAs), laptop computers, digital pagers, wireless cards, and any other device capable of accessing the converged network 110.

While many access technologies have been standardized, management of the entire resources of such a technology comprehensive network, *i.e.*, a NGN is a challenging task. In particular, not only a resource management task has to be access technology agnostic, easy to handle but should be able to support high end-to-end QoS. For performing resource management, in one embodiment, the wireless routers 105(1-N) may combine fixed, wired and wireless link characteristics and leverage given protocol mechanism, *i.e.*, the Internet Protocol. Specifically, the Internet protocol may be used with the packet-switched communication network 100 as a network layer protocol for interconnecting systems, which may support voice and video transmission along with data communications.

Examples of the Internet Protocol include a version four of the Internet Protocol (IPv4) and a version six (IPv6). The IPv4 uses 32-bit unique addresses that can be allocated as public Internet addresses and is described in IETF RFC 791, published in September, 1981. The IPv6 uses 128-bit address to support up to about 3.4 × 10³⁸ public Internet addresses. To assist with router processing, the IPv6 packets include a label that provides a quality of service (QoS) indication for priority applications, such as real-time video and voice. The 128-bit address space of the IPv6 may support many types of devices such as telephones, automobiles, and the like when forming connections on the Internet using a flow ID in a packet header to identify flows.

To perform resource management, the wireless routers 105(1-N) may use a variety of identification schemes to resolve IP addresses for the purposes of routing packets in the NGN that includes an IP network. An IP network comprises logical layers from application to physical layers for network elements to provide an end-to-end service for network traffic. Since the IP network mixes bearer and signaling traffic on a single channel, per-stream or per-packet considerations may not be taken into account.

The wireless routers 105(1-N) may extend QoS models to wireless cellular networks arena on an IP network, significantly improving system performance and capacity while maintaining the QoS of multimedia traffic. Generally, resource management is used to control resource usage by managing one or more resources to avoid resource contention which may occur between two or more entities that desire the same resource at the same time. For example, a cellular system may manage radio resources to provide voice services. By performing resource management of radio resources, for example, IP-based QoS provisioning may be enabled where IP-based QoS requirements may involve service guarantees and/or service differentiation of throughput, delay, delay variation (jitter), loss and error rates, security guarantees, and the like.

Using an Internet Protocol, one or more services including a telecommunication service in multiple broadband, quality of service (QoS)-enabled transport channels may be provided on the packet-based access network 100 that includes a wireless network portion and a fixed, wired network portion. The transport of the plurality of packets within the fixed, wired network portion may be analyzed. Each interface of the first and second interfaces 120(1-2) may enable a different type of Internet protocol-based access to the wireless communication device 115.

The packet-based access network 100 may use a first broadband signal over a first channel to carry a first multimedia content including voice, video or data simultaneously with a second broadband signal over a second channel having independent bandwidth than used for the first channel to carry a second multimedia content including voice, video or data. At least two quality of service (QoS)-enabled transport strategies may be provided for each of the different first and second channels. In this way, the plurality of packets may be communicated in real-time within a multimedia traffic stream between the wireless communication device 115 and at least one of a wireless and a wired local area network within the packet-based access network 100.

To converge the packet-based access network 100 and the at least one of a wireless and a wired local area network into an Internet protocol-based (IP) network, a first resource of the one or more Internet Protocol based resources in the packet-based access network 100 may be merged with a second resource of the one or more Internet Protocol based resources in at least one of a wireless and a wired local area network. For the purposes of leveraging the wireless router 105, *e.g.*, a base station router, each for the first and the second wireless routers 105(1-2) may attach a user via at least two different interfaces 120 simultaneously for a common resource management. One or more wireless links including a first wireless link from the first wireless router 105(1) to the wireless communication device 115 may be treated as an Internet protocol hop.

To a plurality of users on the one or more wireless links that remain simultaneously active via any one or more of the one or more of different interfaces 120 available at the first wireless router 105(1) may be provided. That is, these Internet Protocol based resource(s) including a first and a second radio access resource may be commonly managed in the packet-based access network 100 by comparing at least one of a multiplicity of constraints associated with the specific service for a particular user against the Internet protocol-based Quality of Service (QoS) criteria and meeting at least one of a multiplicity of constraints of a specific service for a particular user during a transition time from the first radio access resource to the second radio access resource.

Turning now to Figure 2, a cellular communication system 200 includes a wireless router 205, *e.g.*, a base station in accordance with one embodiment of the present invention. As shown, the third wireless router 105(3) may comprise a base station router (BSR) card. The wireless router 205 may be a fixed transmission and reception station for handling mobile traffic in the cellular communication system 200. To provide a wireless service, the wireless router 205 comprises at least one antenna 210 that transmits and receives information from a plurality of mobile or wireless communication devices 115(1-M), *e.g.*, cellular phones, in a cell of the cellular communication system 200. While the cell may be divided into multiple sectors, the antenna 210 may serve one or more of the sectors in the cell. In addition to the at least one antenna 210, the wireless router 205 may include base transceiver (BTS) circuitry 215.

Consistent with one embodiment, the wireless router 205 may further include a conventional radio network controller (RNC) 220 coupled to a packet data serving node 225 that includes a foreign agent (FA) 230. A storage 235 may store a common resource managing software (S/W) 240 to route packets over the first, second, or third interface 120(1-3) defined at least in part by the UMTS standard, the IEEE 802.xx standard, and a future mobile system (FSM) standard, respectively. The wireless router 205 may be coupled to an IP core 245 which links the plurality of mobile or wireless communication devices 115(1-M) to the Internet 250 through a home agent (HA) 255. The IP core 245 may couple to an Authentication, Authorization and Accounting (AAA) unit 260 and a session initiation protocol (SIP) server 265. A dynamic host configuration program (DHCP) 270 may be coupled to a domain name service (DNS) 275 that in turn couples to the IP core 245.

The RNC 220 as a network component within the cellular communication system 200 may control flow of the mobile communications, especially packets based on the common resource managing S/W 240. To this end, the RNC 220 may use the PDSN 225, which functions as a connection point between the Radio Access and IP networks. The FA 230 in the cellular communication system 200 provides a network contact point between a mobile or wireless communication device 115 and the rest of the network. The FA 230 may provide an endpoint for packets that are tunneled to the mobile or wireless communication device 115 from the Home Agent 255. In conjunction with the PDSN 225, the HA 255 authenticates Mobile IP registrations from the client module 150 as shown in Figure 1 and maintains current location information. The HA 255 may forward packets destined to the mobile or wireless communication device 115 via the PDSN 225.

The AAA unit 260 provides a remote access security that controls network access by requiring user identification and restricting access to only particular resources, and maintains records of use for billing and network audit. The AAA unit 260 may enable network security services that provide a primary framework to set up access control on the base station router or access server. The SIP 265 server may provide telephony services using distributed resources for creating multimedia applications, including voice over IP (VoIP). While the DHCP 270 being a conventional protocol may assign dynamic IP addresses to the plurality of mobile or wireless communication devices 115(1-M) in the cellular communication system 200, the DNS 275 being a conventional Internet service may translate domain names to or from IP addresses for use on the Internet 250.

Referring to Figure 3, an exemplary protocol stack 300 is illustrated for the wireless router 105(3), such as a base station router that uses the S/W 240 to jointly manage the Internet Protocol based resources on a network layer in accordance with one embodiment of the present invention. A protocol stack 305(1) is shown for the wireless communication device 115, such as the UE. In addition, a protocol stack 305(2) is shown for the third wireless router 105(3) that includes the BTS circuitry 215, the third wireless router 105(3), *i.e.,* the BSR card which includes the FA 230. Likewise, the HA 255 may have an associated protocol stack 305(3). The network layer in these three protocol stacks 305(1-3) may include an Internet Protocol (IP) layer 310 and a mobile IP layer 315.

In one embodiment, the network layer may have an associated Internet Protocol based strategy. Examples of the queuing QoS strategies include a first-in first-out (FIFO) strategy to forward packets in the order of their arrival, apriority queuing strategy to allow prioritization of traffic on a predefined criteria, a custom queuing strategy may allocate a specific amount of a queue to each class while leaving the rest of the queue to be filled in a round-robin fashion, a weighted fair queuing strategy may schedule interactive traffic to the front of the queue and share the remaining bandwidth among high-bandwidth flows, a class-based weighted fair queuing strategy may combine custom queuing and weighted fair queuing, and a low-latency queuing strategy may use a strict priority queuing to give delay-sensitive data, such as voice a preferential treatment over other traffic.

Examples of the reservation, allocation, and policing QoS strategies include a resource reservation protocol (RSVP), a signaling protocol that provides a reservation setup and controls for the resource reservation that integrated services indicate. The hosts and routers use the RSVP to deliver QoS requests to routers along data stream paths and to maintain router and host state to provide a requested QoS based on bandwidth and latency, a real-time protocol (RTP) may prioritize voice traffic packets, a committed access rate strategy may provide a traffic-policing to allocate bandwidth commitments and limitations to traffic sources and destinations while specifying policies for handling traffic that exceeds the bandwidth allocation.

The protocol stacks 305(1-2) may further comprise a Point-to-Point Protocol (PPP) layer 320, which provides a communications protocol that turns a dial-up telephone connection into a point-to-point Internet connection used to run world wide web (WWW) browsers over a phone line. Another layer common to the protocol stacks 305(1-2) may be Radio Link Protocol (RLP) layer 325, which is a protocol used over the interface.

A Medium Access Control (MAC) layer 330 may be also be shared across the protocol stacks 305(1-2). The MAC layer 330 may provide a networking protocol to handle transmission requests, authentication and other overheads in local area networking by being a portion of a data link layer that controls access to a communication channel. The MAC layer 330 is specified in the IEEE 802.xx standard for medium sharing, packets formats and addressing, and error detection. An air link layer 335 may specify a forward radio frequency (RF) channel directed from the converged network 110 to the wireless communication device 115 a reverse RF channel directed from the wireless communication device 115 to the converged network 110, as shown in Figure 1.

The protocol stacks 305(2-3) may comprise a physical (PHY) layer 340; the lowest layer in a network communication model for wireless networking may define use of signal modulation and RF transmission. The PHY layer 340 corresponds to a radio front end and baseband signal processing section and may define parameters, such as data rates, modulation, signaling, transmitter/receiver synchronization, and the like. In the case of wireless communications, the PHY layer 340 defines a transport medium, *i.e.*, communication interface. A link layer 345 of the protocol stacks 305(2-3) may form packets from data sent by higher-level layers and pass these packets down to the PHY layer 340. Use of the protocol stacks 305(1-3) may enable the third wireless router 105(3), *i.e.,* the BSR to be IP-protocol compatible.

With regard to Figure 4, a stylized representation of a method is illustrated for performing resource management of the Internet Protocol based resources to determine routing of a plurality of packets for the wireless communication device 115 capable of communicating with the third wireless router 105(3), as shown in Figure 2 consistent with one embodiment of the present invention. At block 400, the common resource managing S/W 240 may enable at the third wireless router 105(3), at least one of a first wireless connection over the first interface 120(1) and a second wireless connection being simultaneously active over the second interface 120(2) for a particular user.

The common resource managing S/W 240 may distribute information associated with the first and second wireless connections and at least one wireline connection to each wireless router 105 and IP router 125 including the third wireless router 105(3) to commonly manage said one or more Internet Protocol based resources on a network layer having an associated Internet Protocol based strategy, as indicated in block 405. For example, the first wireless connection may be the first wireless link 122(1) or a wireless IP-Hop. A wireline connection may be the network link 127 or an IP-Hop. The transport of the plurality of packets may be analyzed during a specific service of the particular user across the first and second wireless connections and the at least one wireline connection, *e.g.*, the network link 127 to forward the plurality of packets based on the Internet Protocol based strategy, at block 410.

According to one illustrative embodiment, Figure 5 shows a method for analyzing transport of the plurality of packets during the specific service of the particular user to forward the plurality of packets based on the Internet Protocol based strategy for the packet-based access network 100 shown in Figure 1 across a fixed, wired network portion and a wireless network portion thereof. At block 500, at least one transport property of at least one first network link, *i.e.,* the network link 127 between the first wireless router 105(1) and the first Internet protocol-based router 125(1) may be captured in a first metric and at least one first wireless link, *i.e.,* the first wireless link 122(1) between the first wireless router 105(1) and the wireless communication device 115 in a second metric, associated with a specific service for a particular user, used by an Internet protocol-based Quality of Service (QoS) criteria on the network layer to define the first and second metrics.

On the Internet 250, for example, a user-service metric may be related to the end-to-end QoS. For each user and each service a user-service metric may be used for each network link and each wireless link. One example of the first metric for the network link 127 is bandwidth. Examples of the second metric for the first wireless link 122 are throughput, delay or bit rate. A value or information may be associated with each wireless and network link for the corresponding metric. Such value or information of the metric may characterize the respective link for route discovery of the plurality of packets. The value or information of each metric may be distributed to all routers including the wireless routers 105(1-N) and the IP routers 125(1-3), in one embodiment. Based on this metric related distributed information, each router including the wireless routers 105(1-N) and the IP routers 125(1-3) may determine whether or not to forward a packet on an associated wireless link or a network link. By not differentiating between a wireless link and a network link, the wireless routers 105(1-N) and the IP routers 125(1-3) may enable routing of the plurality of packets through the converged network 110.

For such first and second user-service metrics, any number of suitable measurement methodologies may be used. A direct measurement, or a projection or an estimation of metric value may be obtained. Based on the direct measurement, a user-service metric value may be obtained using injected test traffic. For example, a measurement of a round-trip delay of an IP packet of a given size over a given route at a given time may indicate a value of the user-service metric.

In the projection approach, a metric value may be obtained form lower-level measurements, i.e., for given accurate measurements of propagation delay and bandwidth for each step along a path, projection of the complete delay for the path for an IP packet of a given size may be ascertained. The estimation of a metric value may be determined from a set of aggregated measurements of delay for a given one-hop path for IP packets of different sizes, e.g., estimation of propagation delay for the link of that one-hop path may be calculated.

At block 505, configuring the packet-based access network 100 may be configured to cause the Internet protocol-based QoS criteria to select said at least one first network link and said at least one first wireless link based on said first and second metrics. At block 510, the plurality of packets may be communicated over at least one first network link, *i.e.,* the network link 127 between the first wireless router 105(1) and the first Internet protocol-based router 125(1) and at least one first wireless link, *i.e.,* 122(1) to provide a desired end-to-end QoS in the specific service to the particular user. In this manner, the wireless router 105 and the IP router 125 may provide simultaneous access to a user across many access technologies on at least one wireless and at least network link in the converged network 110 of wired/fixed and wireless portions, with a relatively best quality for an end-to-end QoS.

Over the Internet 250, as two examples, QoS models including Integrated Services (IntServ) aided with Resource Reservation Protocol (RSVP) and Differentiated Services (DiffServ) may be deployed. While the IntServ model may guarantee the QoS in a manner of end-to-end fine granularity, the DiffServ model may replace the per-flow service with an aggregate-class, per hop service, while pushing the per-flow state management to edge routers.

The network configuration of the converged network 110 entails connecting the first, second and IP-routers 120(1-3) via wired links. Radio access is performed with the wireless routers 105(1-N) that connect to a user via corresponding wireless links. The network layer management provides a non-centralized management since it is IP-based and is therefore distributed across the first, second and IP-routers 120(1-3) and the first, second, third, fourth and Nth wireless routers 105(1-N).

In some embodiments, a link technology agnostic approach combined with the use of one or more user-and-service specific metrics may provide a resource management for heterogeneous and converged networks. For the resource management, a wireless link becomes an IP hop, enabling use of existing IP mechanisms. In other embodiments, a resource management at the network layer may provide relatively low-cost and less complex wireless routers. Thus, an IP-based resource management may result in a flat architecture for the routers.

Such a flexible approach to the resource management may allow extension of an existing or integration of a new communication interface technologies by adapting the metrics on the new radio access technology without impacting on overall system architecture and protocols as well resource management. A simultaneous access via different radio access technologies may be fully supported by leveraging a BSR as a wireless router. Therefore, in next generation networks, resource management may be based on one or more user-service-specific metrics, employing IP-based mechanisms. Some IP-based QoS mechanisms include queuing strategies and/or reservation, allocation, and policing techniques for packet-forwarding in IP routers for differentiating network traffic streams based on the QoS. More specifically, the IP-based QoS mechanisms for the differentiated services and integrated services may use queuing, reservation, allocation and policing QoS strategies to differentiate network traffic.

Referring to Figure 6, a next generation network (NGN) 600 is schematically depicted to commonly or jointly manage one or more Internet Protocol based resources in a converged administrative IP domain 605 according to one illustrative embodiment of the present invention. The converged administrative IP domain 605 may be coupled to a service provider backbone IP network 610, which in turn, couples an information management system (IMS) 615 thereto. The converged administrative IP domain 605 may include a plurality of wireless routers (WR) 105a(1-4) and a multiplicity of IP routers 125a(1-5) and an administrative edge router 125b. Instead of dedicated resource management, the wireless communication device 115 may communicate through the converged administrative IP domain 605 over at least one of one or more first or second wireless IP-Hops, *i.e.*, wireless links 620(1-2) and at least one of one or more first and second IP-Hops, *i.e.*, network links 127a(1-2), as described above, in some embodiments.

Turning now to Figure 7, a wireless router 105a capable of routing packets over wireless and/or wireline interfaces is schematically depicted in accordance with one embodiment of the present invention. The wireless router 105a may comprise the common resource managing S/F 240 that includes a system manager, a session manager, and a resource manager. The wireless router 105a may further include an IP routing table and a network IP layer to which a plurality of wireless access modules. A corresponding wireless access module may be associated to each respective interface 120.

Finally, Figure 8 schematically depicts a wireless access module capable of evaluating metrics from parameters of a receiver (RX) and a transmitter (TX) for the next generation network 600 shown in Figure 7 in a multi-input-multi-output (MIMO) antenna arrangement consistent with one embodiment of the present invention. The wireless access module may comprise a metrics evaluator and a scheduler coupled to the transmitter. The RX parameters and the TX parameters may be obtained at the receiver and the transmitter, respectively for the metrics evaluator to process the metrics for the IP-based mechanisms, as set forth above.

For the NGN 600, in some embodiments, these IP-based mechanisms include but are not limited to, packet-based transfer, separation of control functions among bearer capabilities, call/session, and application/ service, and decoupling of service provision from network. Additionally, provision of open interfaces, support for a wide range of services, applications and mechanisms based on service building blocks (including real time/streaming/ non-real time services and multi-media), broadband capabilities with end-to-end QoS and transparency, inter-working with legacy networks via open interfaces, generalized mobility, and unrestricted access by users to different service providers.

For example, in next generation of wireless cellular networks, radio resource management strategies may be used for IP-based QoS provisioning. Next generation wireless networks may offer applications with diverse bandwidth and quality of service requirements, a mixture of real-time and non-real-time, circuit- and packet-switched services, and devices with different transmission capabilities and frequency agility. Due to many challenges including the limited radio spectrum, high cost of radio access networks, volatile wireless channel conditions, and the diverse and demanding QoS requirements, supporting end-to-end IP communications and a provision of a universal platform for these applications and devices with reasonable cost, scalability and reliability may be feasible. By supporting heterogeneous traffic seamlessly over a radio access system, a system-wide resource management may be enabled for disparate wireless access techniques. Heterogeneous traffic may be supported seamlessly over a radio access system for disparate wireless access techniques. Such resource management may allow extension of an existing or integration of a new communication interface without impacting on overall system architecture and protocols.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention set forth above is described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, *i.e.*, a meaning other than that understood by skilled artisans, such a special definition will be expressly set forth in the specification in a definitional manner that directly and unequivocally provides the special definition for the term or phrase.

While the invention has been illustrated herein as being useful in a telecommunications network environment, it also has application in other connected environments. For example, two or more of the devices described above may be coupled together via device-to-device connections, such as by hard cabling, radio frequency signals (e.g., 802.11(a), 802.1 1(b), 802.11 (g), Bluetooth, or the like), infrared coupling, telephone lines and modems, or the like. The present invention may have application in any environment where two or more users are interconnected and capable of communicating with one another.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, causes the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations arc considered within the scope of the invention. Accordingly, the protection sought herein is as set forth in the claims below.

## Claims

1. A method of managing one or more Internet Protocol based resources in a packet-based access network (100) that comprises a plurality of nodes interconnected by a plurality of wired connections (127) and a plurality of wireless connections (122), the nodes including at least one user (115) and a plurality of routers (105, 125), the method comprising:
enabling the plurality of concurrent connections (122, 127) to support services associated with the user (115); the method **CHARACTERIZED BY**:
assigning a plurality of wireline metrics to each of said plurality of wired connections (127), each of the plurality of wireline metrics being determined based on at least one transport property of the corresponding wired connection (127) and being associated with one of the services;
assigning a plurality of wireless metrics to the wireless connections (122), the wireless metrics being determined based on at least one transport property of the corresponding wireless connection (122) and being associated with one of the services; and
routing packets associated with each of the services over at least one of the wired connections (127) and at least one wireless connection (122) in said packet-based access network (100) based on the wired metrics and the wireless metrics associated with the services.

2. A method, as set forth in claim 1, further comprising:
performing resource management of said one or more Internet Protocol based resources on a network layer having an associated Internet Protocol based strategy; and
analyzing transport of the packets for each of the services across said wired and wireless connections to forward said plurality of packets based on said Internet Protocol based strategy.

3. A method, as set forth in claim 1, wherein forming the wireline and wireless metrics comprises capturing at least one transport property of at least one first network link between a first wireless router and a first Internet protocol-based router in a first metric and at least one first wireless link between said first wireless router and a wireless communication device in a second metric, said at least one transport property associated with said specific service for said particular user, the method further comprising:
using said at least one transport property for an Internet protocol-based Quality of Service (QoS) criteria on a network layer to define said first and second metrics.

4. A method, as set forth in claim 3, further comprising:
configuring said packet-based access network to cause said Internet protocol-based QoS criteria to select said at least one first network link and said at least one first wireless link based on said first and second metrics; and
communicating said plurality of packets over said at least one first network link and said at least one first wireless link to provide a desired end-to-end QoS in said specific service to said particular user.

5. A method, as set forth in claim 1, further comprising:
using an Internet Protocol to provide one or more services including a telecommunication service in multiple broadband, quality of service (QoS)-enabled transport channels on said packet-based access network including a wireless network portion and a fixed, wired network portion; and
analyzing transport of the packets within said fixed, wired network portion, wherein each interface of said wired and wireless interfaces enables a different type of Internet protocol-based access to a wireless communication device.

6. A method, as set forth in claim 1, further comprising:
using a first broadband signal over a first channel to carry a first multimedia content including voice, video or data simultaneously with a second broadband signal over a second channel having independent bandwidth than used for said first channel to carry a second multimedia content including voice, video or data; and
providing at least two quality of service (QoS)-enabled transport strategies for each of said different first and second channels.

7. A method, as set forth in claim 1, further comprising determining the plurality of wireline metrics based upon at least one of bandwidth, delay, jitter, and packet loss associated with the corresponding wired communication link.

8. A method, as set forth in claim 1, further comprising determining the plurality of wireless metrics based upon at least one of bandwidth, delay, jitter, and packet loss associated with the corresponding wireless communication link.

## Patentansprüche

1. Verfahren zum Verwalten einer oder mehrerer Internet-Protokoll-basierender Ressourcen in einem Paketvermittlungs-Zugangsnetz (100), das eine Mehrzahl von durch eine Mehrzahl von Drahtverbindungen (127) und eine Mehrzahl von drahtlosen Verbindungen (122) zusammengeschalteten Knoten umfaßt, wobei die Knoten mindestens einen Benutzer (115) oder eine Mehrzahl von Routern (105, 125) umfassen, mit folgenden Schritten:
Ermöglichen, daß eine Mehrzahl von konkurrierenden Verbindungen (122, 127) dem Benutzer (115) zugeordnete Dienste unterstützt, **gekennzeichnet durch**:
Zuweisen einer Mehrzahl von drahtgebundenen Metriken zu jeder der Mehrzahl von Drahtverbindungen (127), wobei jede der Mehrzahl von drahtgebundenen Metriken auf Grundlage mindestens einer Transporteigenschaft der entsprechenden Drahtverbindungen (127) bestimmt wird und einem der Dienste zugeordnet ist;
Zuweisen einer Mehrzahl von drahtlosen Metriken zu den drahtlosen Verbindungen (122), wobei die drahtlosen Metriken auf Grundlage mindestens einer Transporteigenschaft der entsprechenden drahtlosen Verbindung (122) bestimmt werden und einem der Dienste zugeordnet sind; und
Leiten von jedem der Dienste zugeordneten Paketen über mindestens eine der Drahtverbindungen (127) und mindestens eine drahtlose Verbindung (122) in dem Paketvermittlungs-Zugangsnetz (100) auf Grundlage der den Diensten zugeordneten drahtgebundenen Metriken und drahtlosen Metriken.

2. Verfahren nach Anspruch 1, weiterhin mit folgendem:
Durchführen von Ressourcenverwaltung der einen oder der mehreren Internet-Protokoll-basierenden Ressourcen in einer Netzschicht mit einer zugehörigen Internet-Protokoll-basierenden Strategie; und
Auswerten des Transports der Pakete für jeden der Dienste über die Drahtverbindungen und drahtlosen Verbindungen zum Weiterleiten der Mehrzahl von Paketen auf Grundlage der Internet-Protokoll-basierenden Strategie.

3. Verfahren nach Anspruch 1, wobei Bilden der drahtgebundenen und drahtlosen Metriken Erfassen mindestens einer Transporteigenschaft von mindestens einer ersten Netzverbindungsstrecke zwischen einem ersten drahtlosen Router und einem ersten Internet-Protokoll-basierenden Router in einer ersten Metrik und mindestens einer ersten drahtlosen Verbindungsstrecke zwischen dem ersten drahtlosen Router und einer drahtlosen Kommunikationsvorrichtung in einer zweiten Metrik, wobei die mindestens eine Transporteigenschaft dem spezifischen Dienst für den bestimmten Benutzer zugeordnet ist, weiterhin mit folgenden:
Benutzen der mindestens einen Transporteigenschaft für ein Internet-Protokoll-basierendes QoS-Kriterium (Quality of Service) in einer Netzschicht zum Definieren der ersten und zweiten Metriken.

4. Verfahren nach Anspruch 3, weiterhin mit folgenden:
Konfigurieren des Paketvermittlungs-Zugangsnetzes zum Veranlassen, daß durch die Internet-Protokoll-basierenden QoS-Kriterien die mindestens eine erste Netzverbindungsstrecke und mindestens eine erste drahtlose Verbindungsstrecke auf Grundlage der ersten und zweiten Metriken ausgewählt wird; und
Vermitteln der Mehrzahl von Paketen über die mindestens eine erste Netzverbindungsstrecke und mindestens eine erste drahtlose Verbindungsstrecke zum Bereitstellen einer gewünschten end-to-end-QoS in dem spezifischen Dienst für den bestimmten Benutzer.

5. Verfahren nach Anspruch 1, weiterhin mit folgendem:
Benutzen eines Internet-Protokolls zum Bereitstellen eines oder mehrerer Dienste einschließlich eines Telekommunikationsdienstes in mehreren QoS-fähigen Breitband-Transportkanälen in dem Paketvermittlungs-Zugangsnetz einschließlich eines drahtlosen Netzteils und eines festen drahtgebundenen Netzteils;
Auswerten des Transports der Pakete innerhalb des festen drahtgebundenen Netzteils, wobei jede Schnittstelle der drahtgebundenen und drahtlosen Schnittstellen eine unterschiedliche Art von Internet-Protokoll-basierendem Zugang zu einer drahtlosen Kommunikationsvorrichtung ermöglicht.

6. Verfahren nach Anspruch 1, weiterhin mit folgendem:
Benutzen eines ersten Breitbandsignals über einen ersten Kanal zum Tragen eines ersten Multimedieninhalts einschließlich von Sprache, Video oder Daten zur gleichen Zeit wie ein zweites Breitbandsignal über einen zweiten Kanal mit unabhängiger Bandbreite, als für den ersten Kanal benutzt wird, zum Tragen eines zweiten Multimedieninhalts einschließlich von Sprache, Video oder Daten, und
Bereitstellen von mindestens zwei QoS-fähigen Transportstrategien für jeden der unterschiedlichen ersten und zweiten Kanäle.

7. Verfahren nach Anspruch 1, weiterhin mit Bestimmen der Mehrzahl von drahtgebundenen Metriken auf Grundlage von mindestens einem von Bandbreite, Verzögerung, Jitter und Paketverlust, die der entsprechenden drahtgebundenen Kommunikationsverbindungsstrecke zugeordnet sind.

8. Verfahren nach Anspruch 1, weiterhin mit Bestimmen der Mehrzahl von drahtlosen Metriken auf Grundlage mindestens eines von Bandbreite, Verzögerung, Jitter und Paketverlust, die der entsprechenden drahtlosen Kommunikationsverbindungsstrecke zugeordnet sind.

## Revendications

1. Procédé de gestion d'une ou de plusieurs ressources de Protocole Internet dans un réseau d'accès en mode paquets (100) qui comprend une pluralité de noeuds interconnectés par une pluralité de connexions filaires (127) et une pluralité de connexions sans fil (122), les noeuds comportant au moins un utilisateur (115) et une pluralité de routeurs (105, 125), le procédé comprenant :
l'activation de la pluralité de connexions simultanées (122, 127) pour supporter des services associés à l'utilisateur (115) ; le procédé ETANT **CARACTERISE PAR**:
l'assignation d'une pluralité de métriques filaires à chacune de ladite pluralité de connexions filaires (127), chacune de la pluralité de métriques filaires étant déterminée d'après au moins une propriété de transport de la connexion filaire correspondante (127) et étant associée à l'un des services ;
l'assignation d'une pluralité de métriques sans fil aux connexions sans fil (122), lés métriques sans fil étant déterminées d'après au moins une propriété de transport de la connexion sans fil correspondante (122) et étant associées à l'un des services ; et
le routage de paquets associés à chacun des services sur au moins l'une des connexions filaires (127) et au moins une connexion sans fil (122) dans ledit réseau d'accès en mode paquets (100) d'après les métriques filaires et les métriques sans fil associées aux services.

2. Procédé selon la revendication 1, comprenant en outre :
l'exécution de la gestion de ressources desdites une ou plusieurs ressources de Protocole Internet sur une couche réseau ayant une stratégie de Protocole Internet associée ; et
l'analyse du transport des paquets pour chacun des services sur lesdites connexions filaires et sans fil afin de renvoyer ladite pluralité de paquets selon ladite stratégie de Protocole Internet.

3. Procédé selon la revendication 1, dans lequel la formation des métriques filaires et sans fil comprend la capture d'au moins une propriété de transport d'au moins une première liaison de réseau entre un premier routeur sans fil et un premier routeur de Protocole Internet dans une première métrique et au moins une première liaison sans fil entre ledit premier routeur sans fil et un dispositif de communication sans fil dans une seconde métrique, ladite au moins une propriété de transport étant associée audit service spécifique pour ledit utilisateur particulier, le procédé comprenant en outre :
l'utilisation de ladite au moins une propriété de transport pour un critère de Qualité de Service (QoS) de Protocole Internet sur une couche réseau afin de définir lesdites première et seconde métriques.

4. Procédé selon la revendication 3, comprenant en outre :
la configuration dudit réseau d'accès en mode paquets afin d'amener ledit critère de QoS de Protocole Internet à sélectionner ladite au moins une première liaison réseau et ladite au moins une première liaison sans fil d'après lesdites première et seconde métriques ; et
la communication de ladite pluralité de paquets sur ladite au moins une première liaison de réseau et ladite au moins une première liaison sans fil afin de fournir une QoS de bout en bout souhaitée dans ledit service spécifique audit utilisateur particulier.

5. Procédé selon la revendication 1, comprenant en outre :
l'utilisation d'un Protocole Internet pour assurer un ou plusieurs services dont un service de télécommunications dans de multiples canaux de transport à fonction de qualité de service (QoS) à large bande sur ledit réseau d'accès en mode paquets comportant une partie de réseau sans fil et une partie de réseau filaire fixe ; et
l'analyse du transport des paquets dans ladite partie de réseau filaire fixe, où chaque interface desdites interfaces filaires et sans fil permet un différent type d'accès de Protocole Internet à un dispositif de communication sans fil.

6. Procédé selon la revendication 1, comprenant en outre :
l'utilisation d'un premier signal à large bande sur un premier canal afin d'acheminer un premier contenu multimédia comportant voix, vidéo ou données simultanément à un second signal à large bande sur un second canal ayant une largeur de bande indépendante de celle utilisée pour ledit premier canal afin d'acheminer un second contenu multimédia comportant voix, vidéo ou données ; et
la mise en place d'au moins deux stratégies de transport à fonction de Qualité de Service (QoS) pour chacun desdits premier et second canaux différents.

7. Procédé selon la revendication 1, comprenant en outre la détermination de la pluralité de métriques filaires d'après au moins l'un de la largeur de bande, du temps de propagation, de la gigue, et de la perte de paquets associés à la liaison de communication filaire correspondante.

8. Procédé selon la revendication 1, comprenant en outre la détermination de la pluralité de métriques sans fil d'après au moins l'un de la largeur de bande, du temps de propagation, de la gigue, et de la perte de paquets associés à la liaison de communication sans fil correspondante.
